Europäisches Patentamt

(19) European Patent Office

Office européen des brevets

(11) Publication number: **0 234 536**
**B1**

(12) **EUROPEAN PATENT SPECIFICATION**

(45) Date of publication of patent specification: **05.09.90**

(21) Application number: **87102512.8**

(22) Date of filing: **23.02.87**

(51) Int. Cl.⁵: **C 21 C 7/00, C 22 B 9/02**

(54) Method for separation of inclusions in molten metal and device for carrying out the method.

(30) Priority: **24.02.86 SE 8600823**

(43) Date of publication of application:
**02.09.87 Bulletin 87/36**

(45) Publication of the grant of the patent:
**05.09.90 Bulletin 90/36**

(84) Designated Contracting States:
**CH DE FR GB IT LI**

(56) References cited:
**EP-A-0 152 849**
**FR-A-1 529 930**
**GB-A-1 336 194**
**US-A-2 099 593**
**US-A-2 800 405**
**US-A-3 632 096**
**US-A-3 756 806**

(73) Proprietor: **ASEA AB**
**S-721 83 Västeras (SE)**

(72) Inventor: **Eidem, Magnus**
**Stenshusvägen 4 C**
**S-730 50 Skultuna (SE)**

(74) Representative: **Boecker, Joachim, Dr.-Ing.**
**Rathenauplatz 2-8**
**D-6000 Frankfurt a.M. 1 (DE)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method for separation of inclusions in molten metal according to the precharacterising part of claim 1. Such a method is previously known from the US-A-2 099 593. The invention also refers to a device for carrying out the method. The inclusions may consist, for example, of slags.

One problem in connection with a method of this kind is to achieve separation in a manner which is favourable from an economical and a production point of view without the need for complicated means and without renouncing the quality of the end product. This may often be a metallurgically and technically difficult problem.

With the method disclosed in the US-A-2 099 593 the surface of the molten metal in the vessel takes on a parabolic shape, due to the centrifugal forces created by rotating the vessel. Slag, accumulating at the centre of the surface is discharged by a pipe penetrating the bottom of the vessel and extending to the surface of the melt. The supply of fresh molten metal to the vessel is accomplished by means of a chute that opens out above the surface of the melt and meets the parabolically formed surface of the melt approximately tangentially in the direction of rotation.

However, with this method, the molten metal supplied into the furnace intermixes with the slag accumulating on the surface of the metal and that the positioning of the chute, on the one hand, and the revolution rate of the rotating molten metal and the filling state of the vessel, on the other hand, have to be carefully matched in order to avoid further disturbances.

From the US-A-3 632 096 it is known to remove slag formed on the surface of molten metal in a vessel by sucking the slag off into a separate chamber via a tube.

The invention aims to further develop the above-mentioned method in such a way that there will be no disturbance of the accumulation of slag on the surface by the supply of fresh molten metal into the vessel and that this supply will be implemented in a simple and reliably operating manner.

To achieve this aim the invention suggests a method according to the introductory part of claim 1, which is characterized by the features of the characterizing part of claim 1.

Further developments of this method are characterized by the features of the additional claims 2 to 4.

A device for carrying out the method according to the invention is characterized by the features of the characterizing part of claim 5, and a further developments of this device is characterized by the features of the additional claim 6.

Several advantages are gained by the method according to the invention. The separation of slags etc. proceeds rapidly and efficiently without being disturbed by and intermixed with the freshly supplied molten metal. The way of supplying fresh molten metal is largely insensible to the revolution rate and the filling state of the rotating molten metal. At the same time homogenization of the molten metal is provided both with regard to temperature and constituents. Also, a certain degree of heat-retaining in the molten metal is obtained by means of the stirrer.

In a preferred embodiment of the invention, the molten metal is tapped through at least one tap hole at the bottom of the vessel, located eccentrically near the side wall. This can be carried out in an extremely simple but also efficient manner.

The peripherally located molten metal becomes substantially free from dispersed slags, and thus the tapped-off molten metal is slag-free. The rotation of the molten metal is brought about by inductive stirring and is performed in such a way that the temperature losses of the molten metal can be compensated for by simultaneous inductive heating of the molten metal.

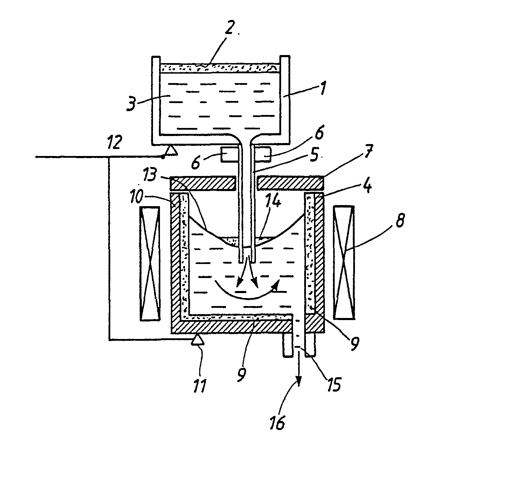

The invention will now be described in greater detail with reference to the accompanying drawing which shows an embodiment of a device for carrying out the invention.

Molten metal is tapped from a primary ladle or tundish 1, which in turn can be filled from a furnace or other vessel. Slag 2 covers the molten metal 3 in the ladle 1 and may to a certain extent, in the form of dispersed slag or in some other form, be carried of with the molten metal when the latter is tapped into a subsequent ladle or vessel 4. The tapping is performed here through a tapping pipe 5 equipped with a regulating device 6 for flow regulation, such as an electromagnetic valve, a sliding valve, or some other form of tapping control means.

The tapping pipe 5 extends through an opening in the roof or lid 7 of the vessel 4 and opens out below the surface of the molten metal in the vessel 4.

The vessel 4 is surrounded by an electromagnetic, inductive stirrer 8 which is powered with multiphase current and which comprises a closed coil or several coils (as in the stator of an a synchronous motor). The stirring is adapted to take place around a vertical, preferably central, axis, for example, extending along the central axis of the tapping pipe 5.

A stirring with a vertical movement can, at the same time, be superimposed on the stirring with the above-mentioned movement, for example for further separation or homogenization. A certain heating or heat-retaining effect may be arranged in the vessel 4.

The vessel 4 may be of the so-called CALIDUS type (see EP-A-85 10 1148.6) comprising an inner part 9 of lining compound for heat insulation and an outer part 10 of a metallic reinforcement, embedded in lining compound, concrete or cement. A sensor 11 of a suitable type may be arranged at the vessel 4, which sensor 11 detects the weight of the vessel 4 with its contents, the output signal of the sensor 11 controlling the flow of the molten metal by means of the regulating device 6. Also ladle 1 can be weighed (at 12) for the same control purpose.

Because the vessel 4 is manufactured of nonmagnetic material, it allows easy penetration of the vessel walls by the magnetic travelling field. For the same reason the walls of the vessel 4 are not substantially heated by the magnetic field. The vessel 4 is lined with a refractory material which is adapted to the metallurgical conditions in the molten metal.

Thus, a kind of centrifuge is obtained which separates particles. The centrifugal effect causes the formation of a convex molten metal surface 14 on the bottom of which agglomerated particles 14 are collected. These particles 14 can be separated in a simple manner, for example by suction by means of a suction apparatus and a closing hood, by means of mechanical deslagging, etc.

A flocculating agent, which renders the slag tough and easily removable, or an absorption agent, such as lime, may be supplied to the molten metal.

All types of molten metals can be treated in this centrifuge.

The centrifugation causes the peripherally located molten metal to become free from dispersed slags, and in this pure form the molten metal can be tapped off through one or more eccentrically located tap holes 15 into a subsequent tundish or mould (see at arrow 16). The centrifuge can be used for separating slag in connection with:

1 Casting of steel or other molten metals, mould casting, continuous casting

2 Atomization of molten metals to produce metal powder

3 Other applications.

## Claims

1. Method for separation of inclusions in molten metals, particularly slags, with molten metal being supplied into a vessel (4), which is rotated about a vertical axis by means of at least one electromagnetic stirrer (8) to such degree as to force said inclusions (14) dispersed in the melt to agglomerate in the centre of the furnace where they are floating up to the bath surface (13), and with the molten metal which has become substantially free from inclusions being tapped through at least one tap hole (15) located in the lower portion of the side wall or the bottom of the furnace, at the side of said axis. characterized in that the supply of the molten metal into the vessel (4) takes place through a pipe (5) extending from a preceding ladle (1) or furnace along approximately said vertical axis of rotation, said pipe (5) opening out below the surface of the molten metal.

2. Method according to claim 1, characterized in that the molten metal is tapped through at least one tap hole (15) in the bottom of the vessel (4), said hole being located eccentrically near the side wall.

3. Method according to any of the preceding claims, characterized in that slag and/or other particles (14) is/are removed from the centre of the cup-shaped molten metal surface by means of suction or by mechanical means.

4. Method according to claim 3, characterized in that prior to being removed the slag is frozen by the addition of a flocculating agent or lime.

5. Device comprising a vessel (4) to accommodate molten metal with at least one electromagnetic stirrer (8) surrounding said vessel, which stirrer is arranged for stirring the molten metal around a vertical axis, said vessel (4) being provided at the lower part of its side wall or its bottom with at least one tapping hole (15) located eccentrically with respect to said axis of rotation, characterized in that a tapping pipe (5) is arranged to extend from a preceding ladle or furnace (1), said pipe being intended to open out below the surface of the molten metal and located along approximately the vertical axis of rotation of the molten metal.

6. Device according to claim 5, characterized in that the vessel (4) consists of a ladle which comprises an inner part (9) of lining compound for heat insulation as well as an outer part (10) of metallic reinforcement, embedded in lining compound, concrete or cement.

## Patentansprüche

1. Verfahren zur Absonderung von Einschlüssen in flüssigen Metallen, insbesondere Schlackeneinschlüssen, wobei geschmolzenes Metall in ein Gefäß (4) gefüllt wird, wobei das geschmolzene Metall mittels mindestens eines elektro-magnetischen Rührers mit solcher Stärke um eine vertikale Achse gedreht wird, daß die in der Schmelze verteilten Einschlüsse (14) sich im Zentrum des Ofens sammeln, wo sie auf der Oberfläche (13) des Bades schwimmen, und wobei das geschmolzene Metall, welches im wesentlichen von Einschlüssen befreit wurde, durch mindestens ein im unteren Teil der Seitenwand oder im Boden des Ofens seitlich der genannten Achse gelegenes Abzapfloch (15) abgestochen wird, dadurch gekennzeichnet, daß der Zustrom von geschmolzenem Metall in das Gefäß (4) durch ein Rohr (5) erfolgt, welches sich von einer vorgeschalteten Pfanne (1) oder einem vorgeschalteten Ofen annähern längs der genannten vertikalen Drehachse erstreckt, wobei das Rohr (5) unter der Oberfläche des geschmolzenen Metalles mündet.

2. Verfahren nach Anspruch (1), dadurch gekennzeichnet, daß das geschmolzene Metall durch mindestens ein Abzapfloch (15) im Boden des Gefäßes abgezapft wird, welches Loch exzentrisch nahe der Seitenwand angeordnet ist.

3. Verfahren nach einem der vorhergehenden Ansprüche, dadurch gekennzeichnet, daß Schlacke und/oder andere Partikel (14) von der Mitte der kappenförmigen Oberfläche des geschmolzenen Metalls durch Saugen oder mechanische Einrichtungen entfernt wird/werden.

4. Verfahren nach Anspruch 3, dadurch gekennzeichnet, daß die Schlacke vor ihrer Entfernung durch Zufügung von Flockungsmittel oder Kalk in den erstarrten Zustand übergeführt wird.

5. Vorrichtung mit einen Gefäß (4) zur Aufnahme geschmolzenen Metalls, mit mindestens einem elektro-magnetischen Rührer (8), welcher daß genannte Gefäß umgibt und zum Rühren des geschmolzenen Metalls um eine vertikale Achse geeignet ist, wobei das Gefäß (4) an dem unteren Teil seiner Seitenwand oder an seinem Boden mit mindestens einem exzentrisch im Bezug auf die genannte Rotationsachse angeordneten Abzapfloch (15) versehen ist, dadurch gekennzeichnet, daß ein Abzapfrohr (5) sich von einer vorgeschalteten Pfanne oder einem vorgeschalteten Ofen (1) annähernd längs der vertikalen Drehachse des geschmolzenen Metalls erstreckt und so beschaffen ist, daß es unter der Oberfläche des geschmolzenen Metalls mündet.

6. Vorrichtung nach Anspruch 5, dadurch gekennzeichnet, daß das Gefäß (4) aus einer Pfanne besteht, welche einen inneren Teil (9) aus Ausfütterungsmasse zur Wärmeisolierung sowie einen äußeren Teil (10) aus metallischen Verstärkungen enthält, die in Ausfütterungsmasse, Beton oder Zement eingebettet sind.

**Revendications**

1. Procédé pour la séparation d'inclusions dans des métaux en fusion, et en particulier de scories, dans lequel le métal en fusion est introduit dans une cuve (4) et est mis en rotation autour d'un axe vertical au moyen d'au moins un agitateur électromagnétique (8) pour forcer les inclusions (14) dispersées dans le bain en fusion à s'agglomérer au centre du four où elles s'élèvent pour flotter à la surface du bain en fusion (13), et dans lequel le métal en fusion qui a été pratiquement débarrassé d'inclusions est prélevé par au moins un trou de coulée (15) se trouvant dans la partie inférieure de la paroi latérale ou dans le fond du four, sur le côté par rapport à l'axe précité, caractérisé en ce que l'alimentation de la cuve (4) en métal en fusion s'effectue au moyen d'un tuyau (5) qui provient d'une poche (1) ou d'un four précédent et qui coïncide approximativement avec l'axe de rotation vertical, ce tuyau (5) débouchant au-dessous de la surface du métal en fusion.

2. Procédé selon la revendication 1, caractérisé en ce que le métal en fusion est prélevé par au moins un trou de coulée (15) au fond de la cuve (4), ce trou étant placé en position excentrique près de la paroi latérale.

3. Procédé selon l'une quelconque des revendications précédentes, caractérisé en ce que des scories et/ou d'autres particules (14) sont extraites du centre de la surface du métal en fusion en forme de cuvette par aspiration ou par des moyens mécaniques.

4. Procédé selon la revendication 3, caractérisé en ce qu'avant d'être enlevées, les scories sont solidifiées par l'ajout d'un agent de floculation ou de chaux.

5. Dispositif comprenant une cuve (4) destinée à recevoir du métal en fusion, avec au moins un agitateur électromagnétique (8) entourant la cuve, cet agitateur étant conçu pour agiter le métal en fusion en lui communiquant un mouvement autour d'un axe vertical, la cuve (4) comportant à la partie inférieure de sa paroi latérale ou dans son fond au moins un trou de coulée (15) placé en position excentrique par rapport à l'axe de rotation, caractérisé en ce qu'un tuyau de coulée (5) est disposé de façon à s'étendre à partir d'un poche ou d'un four précédent (1), ce tuyau débouchant au-dessous de la surface du métal en fusion et étant placé de façon à s'étendre approximativement le long de l'axe de rotation vertical du métal en fusion.

6. Dispositif selon la revendication 5 caractérisé en ce que la cuve (4) consiste en une poche qui comprend une partie intérieure (9) consistant en un composé de revêtement pour l'isolation thermique, ainsi qu'une partie extérieure (10) consistant en un renfort métallique noyé dans un composé de revêtement, du béton ou du ciment.